# EUROPÄISCHE PATENTSCHRIFT

(11) **EP 1 669 621 B1**
(45) Veröffentlichungstag und Bekanntmachung des Hinweises auf die Patenterteilung: **03.01.2007**
(21) Anmeldenummer: 04029675.8
(22) Anmeldetag: 13.12.2004
(51) Int. Cl.: F16D 1/08, B23B 31/30

(54) **Spanneinrichtung**
Clamping device
Dispositif de serrage

(43) Veröffentlichungstag der Anmeldung: 14.06.2006
(73) Patentinhaber: Schunk GmbH & Co. KG Spann- und Greiftechnik, 74348 Lauffen (DE)
(72) Erfinder: Retzbach, Thomas, 74357 Bönnigheim (DE)
(74) Vertreter: Paul, Dieter-Alfred

(56) Entgegenhaltungen:
- DE-A1- 3 721 521
- DE-C1- 19 834 739
- PATENT ABSTRACTS OF JAPAN Bd. 1995, Nr. 11, 26. Dezember 1995 (1995-12-26) & JP 07 223103 A (KURODA PRECISION IND LTD), 22. August 1995 (1995-08-22)

## Beschreibung

Die Erfindung betrifft eine Spanneinrichtung mit einem Grundkörper, der eine zentrale Aufnahme für ein zu spannendes Bauteil und um die Aufnahme herum mehrere Hohlräume aufweist, wobei der Grundkörper durch radiale Druckkräfte, die im Bereich der Hohlräume von außen aufgebracht werden, derart elastisch verformbar ist, daß ein zu spannendes Bauteil in die Aufnahme eingeschoben werden kann, und durch Verringerung bzw. Aufhebung der radialen Druckkräfte elastisch rückverformt werden kann, um eine Druckverbindung mit dem zu spannenden Bauteil herzustellen.

Spanneinrichtungen dieser Art sind beispielsweise aus der DE 198 34 739 C1 bekannt. Bei diesen Spanneinrichtungen ist der Grundkörper polygonförmig ausgebildet und wird durch Aufbringung von radialen Druckkräften elastisch in eine runde Form gebracht. Dabei werden die zwischen den Kraftangriffspunkten gelegenen Bereichen des Grundkörpers derart verformt, daß sich die Aufnahme weitet und ein runder Schaft montiert werden kann. Wenn dann die Radialkräfte verringert oder aufgehoben werden, federt das verformte Bauteil in seine polygone Ausgangsform zurück, so daß der Schaft in der Aufnahme über einen Preßsitz fixiert wird.

Bei den bekannten Spanneinrichtungen gewährleisten die Hohlräume, welche zweckmäßigerweise so plaziert sind, daß die Wirkungslinien der radialen Druckkräfte mittig durch sie verlaufen, daß der Grundkörper auch bei ansonsten dickwandiger Ausbildung mit vergleichbar geringem Kraftaufwand verformt werden kann und das Verformungsverhalten von einem dünnwandigen Bauteil aufweist.

Diese Art von Spanneinrichtungen hat sich in der Praxis durchaus bewährt. Es wird allerdings zum Teil als nachteilig empfunden, daß bei sehr hohen Drehzahlen von weit über 100.000 Umdrehungen/min die Spanneinrichtung unter dem Einfluß der wirkenden Fliehkräfte eine Tendenz besitzt, sich zu öffnen, so daß eine sichere Einspannung nicht mehr gewährleistet ist.

Aufgabe der Erfindung ist es daher, eine Spanneinrichtung der eingangs genannten Art so auszugestalten, daß auch bei hohen Drehzahlen eine sichere Einspannung gewährleistet ist.

Diese Aufgabe ist erfindungsgemäß dadurch gelöst, daß in den Hohlräumen Fliehkraftausgleichsgewichte vorgesehen sind. Wird die erfindungsgemäße Spanneinrichtung in Rotation gesetzt, so werden die Fliehkraftausgleichsgewichte aufgrund der auftretenden Zentrifugalkräfte nach außen gedrückt mit der Folge, daß die dazwischen liegenden Bereiche nach innen gebogen werden und damit die Aufnahme schließt. Die Spannkraft wird damit je nach Größe und Gewicht der Fliehkraftausgleichsgewichte erhalten oder sogar verstärkt. Versuche haben gezeigt, daß bei den erfindungsgemäßen Spanneinrichtungen eine sichere Einspannung bis zu Drehgeschwindigkeiten von 250.000 Umdrehungen/min und mehr gewährleistet werden kann.

Gemäß einer Ausführungsform der Erfindung ist es vorgesehen, daß die Fliehkraftausgleichsgewichte einteilig mit dem Grundkörper ausgebildet und im Bereich der Außenwandungen der Hohlräume mit dem Grundkörper durch stegartige Verbindungsbereiche verbunden sind. In diesem Fall ist es zweckmäßig, die stegartigen Verbindungsbereiche zwischen dem Grundkörper im Bereich der Außenwandungen der Hohlräume und dem Fliehkraftausgleichsgewichten in Umfangsrichtung betrachtet etwa mittig von den Hohlräumen anzuordnen, d. h. in den Bereichen, in denen auch die radialen Druckkräfte auf den Grundkörper aufgebracht werden, um die Aufnahme zu öffnen.

Alternativ ist es möglich, die Fliehkraftausgleichsgewiche als separate Bauteile in die Hohlräume einzusetzen, wobei die Fliehkraftgewichte derart ausgebildet und angeordnet sind, das zwischen den Fliehkraftausgleichsgewichten und dem Grundkörper stegartige Krafteinleitungsbereiche gebildet werden, in denen insbesondere ein direkter Kontakt zwischen dem Grundkörper und den Fliehkraftausgleichsgewichten besteht. Auch in diesem Fall ist es zweckmäßig, wenn die stegartigen Krafteinleitungsbereiche in Umfangsrichtung betrachtet etwa mittig in den Hohlräumen angeordnet sind. Um bei dieser Ausführungsform die Fliehkraftausgleichsgewichte zu positionieren, ist es zweckmäßig, die um die Fliehkraftausgleichsgewichte herum liegenden Bereiche der Hohlräume mit einem elastischen Material wie beispielsweise Kunststoff zu füllen. Dieses Material kann entweder nach dem Einsetzen der Fliehkraftausgleichsgewichte in die Hohlräume gefüllt werden, oder als vorgefertigte Positionierhilfe zur Verfügung gestellt werden. Die Verfüllung mit einem solchen elastischen Material kann selbstverständlich auch vorgesehen sein, wenn die Fliehkraftausgleichsgewichte mit dem Grundkörper fest verbunden sind.

Im übrigen ist es auch möglich, die als separate Bauteile ausgebildeten Fliehkraftausgleichsgewichte auf geeignete Weise an den Krafteinleitungsbereich mit dem Grundkörper zu verbinden.

Weiterhin können die Hohlräume in an sich bekannter Weise zur Aufnahme hin offen ausgestaltet und insbesondere mit der Aufnahme durch radiale Einschnitte, die in Umfangsrichtung betrachtet mittig von den Hohlräumen plaziert sind, verbunden sein. In diesem Fall werden zwischen den Einschnitten separate Spannbacken in der Aufnahme definiert.

Gemäß einer alternativen Ausführungsform der Erfindung ist vorgesehen, daß die Hohlräume zumindest teilweise mit einem Schüttgut und/oder einer Flüssigkeit als Fliehkraftausgleichsgewichte verfüllt sind. Die Fliehkraftausgleichsgewichte können in diesem Fall eine durch eine lose Verfüllung aus Sandkörnern, Stahlkugel o. dgl. gebildet sein, welche zweckmäßigerweise mit einem Gleitmittel wie beispielsweise einer Flüssigkeit benetzt sind, um sie leichter gleiten zu lassen.

Hinsichtlich weiterer vorteilhafter Ausgestaltungen der Erfindung wird auf die Unteransprüche sowie die nachfolgende Beschreibung von Ausführungsbeispielen unter Bezugnahme auf die beiliegende Zeichnung verwiesen. In der Zeichnung zeigt:
- Figur 1: eine erste Ausführungsform einer erfindungsgemäßen Spanneinrichtung im Füge- und/oder Lösezustand,
- Figur 2: die Spanneinrichtung aus Figur 1 im unbetätigten Spannzustand,
- Figur 3: eine zweite Ausführungsform einer erfindungsgemäßen Spanneinrichtung im Spannzustand und
- Figur 4: eine dritte Ausführungsform einer erfindungsgemäßen Spanneinrichtung im Spannzustand.

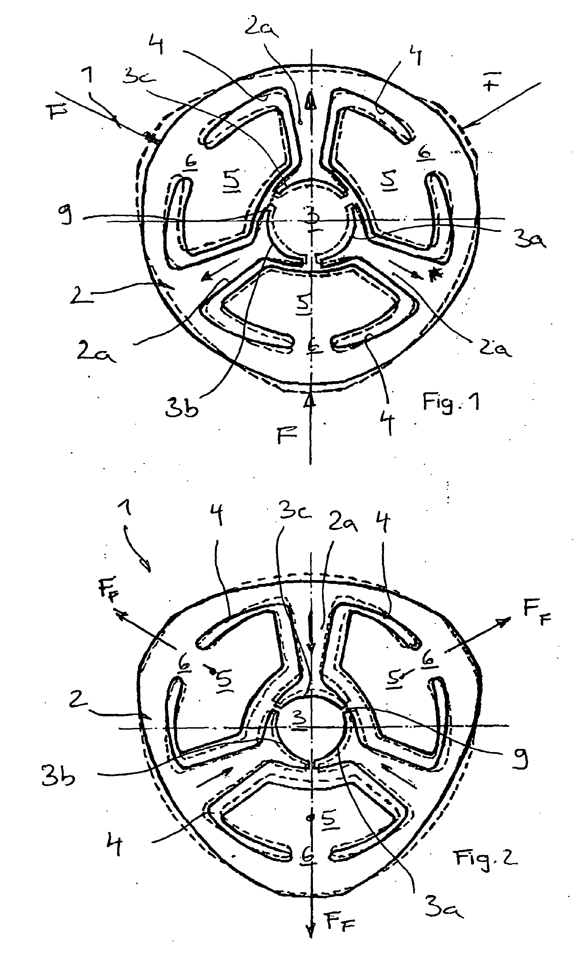

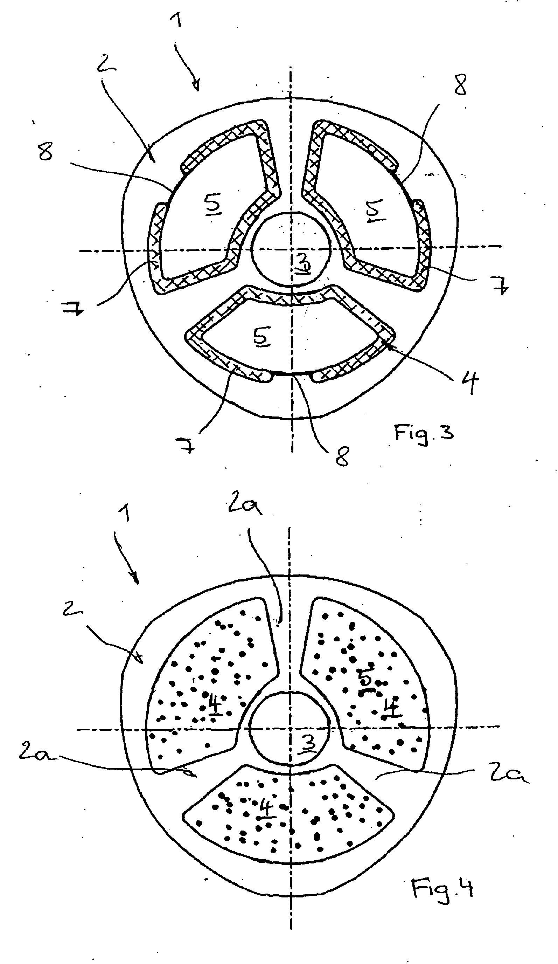

In den Figuren 1 und 2 ist eine Ausführungsform einer erfindungsgemäßen Spanneinrichtung 1 dargestellt, die beispielsweise als ein Spannfutter zum Spannen von Werkzeugen an der Arbeitsspindel einer Werkzeugmaschine ausgebildet oder aber auch direkt in die Arbeitsspindel einer werkzeugmaschine integriert sein kann. Die Spanneinrichtung 1 umfaßt einen Grundkörper 2 mit einer polygonen Außenkontur, in dem eine zentrale Aufnahme 3 für ein zu spannendes Bauteil ausgebildet ist. Um die Aufnahme 3 herum sind in dem Grundkörper 2 kreisabschnitt- oder nierenförmige Hohlräume 4 ausgebildet, die sich jeweils über einen Umfangsbereich von etwa 100° erstrecken und in den Grundkörper 2 beispielsweise durch einen Erodier- oder Fräsvorgang eingebracht sind. Damit verbleiben zwischen den Hohlräumen 4 Stege 2a, über welche die außerhalb der Hohlräume 4 gelegenen Wandbereiche mit den innerhalb der Hohlräume 4 gelegenen Wandbereichen des Grundkörpers 2 verbunden sind. Die Figuren 1 und 2 zeigen ebenfalls, daß die Hohlräume 4 zur Aufnahme 3 hin durch radiale Einschnitte 9, die in Umfangsrichtung betrachtet etwa mittig von den Hohlräumen 4 angeordnet sind, verbunden sind. Dabei werden zwischen den radialen Einschnitten drei diskrete Spannbacken 3a, 3b, 3c der Aufnahme 3 ausgebildet, die jeweils über die zwischen den Hohlräumen 4 gelegenen Stege 2a mit den radial außerhalb der Hohlräume 4 gelegenen Wandbereichen des Grundkörpers 2 verbunden sind.

Erfindungsgemäß sind in den Hohlräumen 4 Fliehkraftausgleichsgewichte 5 vorgesehen. Diese Fliehkraftausgleichsgewichte 5 besitzen eine an die Form der Hohlräume 4 angepaßte Kontur und sind einteilig mit dem Grundkörper 2 ausgebildet, wobei sie mit diesem im Bereich der Außenwandungen der Hohlräume 4 durch stegartige Verbindungsbereiche 6, die in Umfangsrichtung betrachtet etwa mittig von den Hohlräumen 4 plaziert sind, verbunden sind.

Wenn mit der Spanneinrichtung 1 ein Bauteil wie beispielsweise der Schaft eines Bohrers oder eines Fräswerkzeugs gespannt werden soll, werden, wie in der Figur 1 angedeutet ist, radiale Druckkräfte F von außen auf den Grundkörper 2 ausgeübt, wobei die Kraftangriffspunkte so gewählt sind, daß die Wirkungslinien der Kräfte F etwa mittig durch die Hohlräume 4 verlaufen. Durch die Druckkräfte F wird der Grundkörper 2 im Bereich der Kraftangriffspunkte radial nach innen gedrückt, und gleichzeitig werden die zwischen den Angriffspunkten gelegenen Bereiche, d. h. die zwischen den Hohlräumen 4 gebildeten Stege 2a und mit diesen die Spannbacken 3a, 3b, 3c elastisch nach außen verformt, so daß die Aufnahme 3 sich vergrößert und das zu spannende Bauteil in die Aufnahme 3 eingeschoben werden kann.

Wenn jetzt die radialen Druckkräfte F verringert oder aufgehoben werden, erfolgt eine elastische Rückverformung des Grundkörpers 2 mit der Folge, daß sich die Stege und damit die Spannbacken 3a, 3b, 3c der Aufnahme 3 wieder nach innen bewegen und mit der elastischen Rückstellkraft gegen den Schaft drücken, wodurch ein Preßsitz gebildet wird.

Wenn im Betrieb die Spanneinrichtung 1 mit hohen Umdrehungszahlen rotiert, werden die Fliehkraftausgleichsgewichte 5 durch die auftretenden Zentrifugalkräfte F_{F} nach außen gedrückt. Diese Kräfte F_{F} werden über die stegartigen Verbindungsbereiche 6 in den übrigen Grundkörper 2 eingeleitet, so daß dieser an den Verbindungsbereichen 6 nach außen gedrückt wird. Dabei werden die dazwischen liegenden Bereiche und damit auch der die zwischen den Hohlräumen 4 gelegenen Stege 2a und die Spannbacken 3a, 3b, 3c der Aufnahme nach innen gebogen, wodurch die Spannkraft auch bei hohen Drehzahlen erhalten oder sogar noch verstärkt werden kann.

In der Figur 3 ist eine abgewandelte Ausführungsform des in den Figuren 1 und 2 dargestellten und vorstehend beschriebenen Spanneinrichtung 1 dargestellt. Bei dieser Ausführungsform sind die Fliehkraftausgleichsgewichte 5 als separate Bauteile ausgebildet und in die Hohlräume 4 eingesetzt. Die Fliehkraftausgleichsgewichte 5 sind dabei in gleicher Weise wie bei der zuvor unter Bezugnahme auf die Figuren 1 und 2 beschriebenen Spanneinrichtung 1 ausgebildet und kontaktieren den Grundkörper 2 im Bereich der Außenwandungen der Hohlräume 4 nur durch stegartige Krafteinleitungsbereiche 8, die in Umfangsrichtung betrachtet etwa mittig von den Hohlräumen 4 plaziert sind. Um die Fliehkraftausgleichsgewichte 5 in den Hohlräumen sicher zu positionieren, sind die in den Hohlräumen 4 verbleibenden Freiräume um die Fliehkraftausgleichsgewichte 5 herum mit einem elastischen Kunststoffmaterial 7 gefüllt. Dieses elastische Kunststoffmaterial 7 kann ein vorgefertigtes, beispielsweise spritzgegossenes Positionierelement sein.

Wesentlich ist, daß in den Krafteinleitungsbereichen B möglichst ein direkter Kontakt zwischen den Fliehkraftausgleichsgewichten 5 und dem Grundkörper 2 besteht, um eine direkte Krafteinleitung von den Fliehkraftausgleichsgewichten 5 in den Grundkörper 2 zu gewährleisten.

Es ist auch möglich, die Fliehkraftausgleichsgewichte 5 in den Krafteinleitungsbereichen 8 an dem Grundkörper 2 zu fixieren, beispielsweise anzuvulkanisieren.

In der Figur 4 ist schließlich eine dritte Ausführungsform der erfindungsgemäßen Spanneinrichtung 1 dargestellt, bei welcher die Fliehkraftausgleichsgewichte 5 durch eine lose Verfüllung aus Sandkörnern, Stahlkugeln o. dgl. gebildet sind, welche mit einer Flüssigkeit benetzt sind, um sie leichter gleiten zu lassen.

Bei den in den Figuren 3 und 4 dargestellten Ausführungsformen ist die Aufnahme 3 geschlossen ausgebildet, d. h. es besteht im Unterschied zu den in den Figuren 1 und 2 dargestellten Spanneinrichtungen 1 keine Verbindung zwischen der Aufnahme 3 und den Hohlräumen 4.

## Patentansprüche

1. Spanneinrichtung mit einem Grundkörper (2), der eine zentrale Aufnahme (3) für ein zu spannendes Bauteil und um die Aufnahme (3) herum mehrere Hohlräume (4) aufweist, wobei der Grundkörper (2) durch radiale Druckkräfte (F), die im Bereich der Hohlräume (3) von außen aufgebracht werden, derart elastisch verformbar ist, daß ein zu spannendes Bauteil in die Aufnahme (3) eingeschoben werden kann, und durch Verringerung bzw. Aufhebung der radialen Druckkräfte elastisch rückverformt werden kann, um eine Druckverbindung mit dem zu spannenden Bauteil herzustellen, **dadurch gekennzeichnet, daß** in den Hohlräumen (4) Fliehkraftausgleichsgewichte (5) vorgesehen sind.

2. Spanneinrichtung nach Anspruch 1, **dadurch gekennzeichnet, daß** die Fliehkraftausgleichsgewichte (5) einteilig mit dem Grundkörper (2) ausgebildet und im Bereich der Außenwandungen der Hohlräume (4) mit dem Grundkörper (2) durch stegartige Verbindungsbereiche (6) verbunden sind.

3. Spanneinrichtung nach Anspruch 1, **dadurch gekennzeichnet, daß** die Fliehkraftausgleichsgewichte (5) als separate Bauteile in die Hohlräume (4) eingesetzt und derart ausgebildet und angeordnet sind, daß zwischen den Fliehkraftausgleichsgewichten (5) und dem Grundkörper (2) im Bereich der Außenwandungen der Hohlräume (4) stegartige Krafteinleitungsbereiche (8) gebildet werden, in denen insbesondere ein direkter Kontakt zwischen dem Grundkörper (2) und den Fliehkraftausgleichsgewichten besteht.

4. Spanneinrichtung nach Anspruch 2 oder 3, **dadurch gekennzeichnet, daß** die stegartigen Verbindungs- oder Krafteinleitungsbereiche (6, 8) zwischen dem Grundkörper (2) und den Fliehkraftausgleichsgewichten (5) in Umfangsrichtung betrachtet etwa mittig von den Hohlräumen (4) angeordnet sind.

5. Verbindungseinrichtung nach einem der Ansprüche 1 bis 4, **dadurch gekennzeichnet, daß** die um die Fliehkraftausgleichsgewichte (5) herum liegenden Bereiche der Hohlräume (4) mit einem elastischen Material gefüllt sind.

6. Verbindungseinrichtung nach einem der Ansprüche 2 bis 4, **dadurch gekennzeichnet, daß** die Hohlräume (4) zur Aufnahme (3) hin offen sind.

7. Verbindungseinrichtung nach Anspruch 6, **dadurch gekennzeichnet, daß** die Hohlräume (4) mit der Aufnahme (3) durch radiale Einschnitte (9), die in Umfangsrichtung betrachtet mittig von den Hohlräumen (4) plaziert sind, verbunden sind.

8. Verbindungseinrichtung nach Anspruch 1, **dadurch gekennzeichnet, daß** die Hohlräume (4) zumindest teilweise mit einem Schüttgut und/oder einer Flüssigkeit als Fliehkraftausgleichsgewichte (5) verfüllt sind.

9. Spanneinrichtung nach Anspruch 8, **dadurch gekennzeichnet, daß** die Fliehkraftausgleichsgewichte (5) durch eine lose Verfüllung aus Sandkörnern, Stahlkugel o. dgl. gebildet sind, welche mit einem Gleitmittel, insbesondere einer Flüssigkeit, benetzt sind.

## Claims

1. A clamping device with a base element (2) which has a central receptacle (3) for a component to be clamped and several cavities (4) around the receptacle (3), the base element (2) being elastically deformable by radial compressive forces (F) which are applied from the outside in the region of the cavities (3), such that a component to be clamped can be pushed into the receptacle (3) and by reducing or releasing the radial compressive forces can be elastically deformed back in order to create a pressure connection with the component to be clamped, **characterised in that** centrifugal force counterweights (5) are provided in the cavities (4).

2. The clamping device according to Claim 1, **characterised in that** the centrifugal force counterweights (5) are formed integrally with the base element (2) and are connected in the region of the outer walls of the cavities (4) to the base element (2) by bar-like connection regions (6).

3. The clamping device according to Claim 1, **characterised in that** the centrifugal force counterweights (5) are inserted as separate components into the cavities (4) and are designed and arranged such that bar-like force application regions (8) are formed between the centrifugal force counterweights (5) and the base element (2) in the region of the outer walls of the cavities (4) in which there is in particular direct contact between the base element (2) and the centrifugal force counterweights.

4. The clamping device according to Claim 2 or 3, **characterised in that** the bar-like connection or force application regions (6, 8) between the base element (2) and the centrifugal force counterweights (5) are positioned approximately centrally in the cavities (4), as viewed in the circumferential direction.

5. A connection device according to any of Claims 1 to 4, **characterised in that** the regions of the cavities (4) lying around the centrifugal force counterweights (5) are filled with an elastic material.

6. The connection device according to any of Claims 2 to 4, **characterised in that** the cavities (4) are open to the receptacle (3).

7. The connection device according to Claim 6, **characterised in that** the cavities (4) are connected to the receptacle (3) by radial cuts (9) which are positioned centrally in the cavities (4) as viewed in the circumferential direction.

8. The connection device according to Claim 1, **characterised in that** the cavities (4) are filled at least partially with a bulk material and/or a liquid as centrifugal force counterweights (5).

9. The clamping device according to Claim 8, **characterised in that** the centrifugal force counterweights (5) are formed by a loose filling comprising grains of sand, steel balls or similar which are moistened with a lubricant, in particular a liquid.

## Revendications

1. Dispositif de serrage avec un corps de base (2), qui présente un logis central (3) pour une pièce qui doit être fixée, et autour le logis (3) présente plusieurs cavité (4), où le corps de base (2), par l'intermédiaire des pesées radiales (F) appliquées du côté de l'extérieur dans la zone des cavités (4) peut être déformé de manière élastique de sorte qu'une pièce qui doive être fixée puisse être introduite dans le logis (3), et par la diminution respectivement l'annulation des pesées radiales puisse revenir de manière élastique à la forme initiale pour réaliser un assemblage par pression avec la pièce qui doit être fixée, **caractérisé en ce que**, dans les cavités (4) sont prévus des poids de compensation de la force centrifuge (5).

2. Dispositif de serrage selon la revendication 1, **caractérisé en ce que**, les poids de compensation de la force centrifuge (5) sont formés monobloc avec le corps de base (2), et dans la zone des parois extérieures des cavités (4), sont liés avec le corps de base (2) par des zones de liaison (6) en forme de nervures.

3. Dispositif de serrage selon la revendication 1, **caractérisé en ce que**, les poids de compensation de la force centrifuge (5) sont introduits comme des composants séparés dans les cavités (4), et sont formés et disposés de sorte qu'entre les poids de compensation de la force centrifuge (5) et le corps de base (2), dans la zone des parois extérieures des cavités (4), soient formées des zones d'application de la force (8) en forme de nervures, où en particulier qu'on existe un contact direct entre le corps de base (2) et les poids de compensation de la force centrifuge.

4. Dispositif de serrage selon la revendication 2 ou 3, **caractérisé en ce que**, les zones de liaison ou d'application de la force (6, 8), en forme de nervures, sont disposées entre le corps de base (2), et les poids de compensation de la force centrifuge (5), approximativement de manière centrale à l'égard des cavités (4) en regardant dans la direction de la circonférence.

5. Dispositif de serrage selon l'une des revendications 1 à 4, **caractérisé en ce que**, les zones des cavités (4) autour les poids de compensation de la force centrifuge (5), sont remplies avec un matériel élastique.

6. Dispositif de serrage selon l'une des revendications 2 à 4, **caractérisé en ce que**, les cavités (4) sont ouvertes vers le logis (3).

7. Dispositif de serrage selon la revendication 6, **caractérisé en ce que**, les cavités (4) communiquent avec le logis (3) par des entailles (9) radiales, qui regardées dans la direction de la circonférence sont placées en position centrale à l'égard des cavités (4).

8. Dispositif de serrage selon la revendication 1, **caractérisé en ce que**, les cavités (4) sont remplies au moins partiellement avec un matériel versé et/ou avec un fluide, avec le rôle de poids de compensation de la force centrifuge (5).

9. Dispositif de serrage selon la revendication 8, **caractérisé en ce que**, les poids de compensation de la force centrifuge (5) sont formés d'un remplissage libre de granules de sable, de billes d'acier ou quelque chose pareille, qui sont humectées avec une substance de graissage, en particulier avec un fluide.
